# EUROPÄISCHE PATENTSCHRIFT

(11) **EP 3 684 673 B1**
(45) Veröffentlichungstag und Bekanntmachung des Hinweises auf die Patenterteilung: **16.12.2020**
(21) Anmeldenummer: 18792875.9
(22) Anmeldetag: 15.10.2018
(51) Int. Cl.: B62D 1/20, F16C 3/035, F16C 29/06

(54) **LENKWELLE FÜR EIN KRAFTFAHRZEUG**
STEERING SHAFT FOR A MOTOR VEHICLE
ARBRE DE DIRECTION POUR UN VÉHICULE AUTOMOBILE

(30) Priorität: 19.10.2017 DE 102017218741
(43) Veröffentlichungstag der Anmeldung: 29.07.2020
(73) Patentinhaber: thyssenkrupp Presta AG, 9492 Eschen (LI); thyssenkrupp AG, 45143 Essen (DE)
(72) Erfinder: WYSS, Martin, 6440 Brunnen (CH)
(74) Vertreter: thyssenkrupp Intellectual Property GmbH
(86) Internationale Anmeldenummer: PCT/EP2018/078111
(87) Internationale Veröffentlichungsnummer: WO 2019/076832

(56) Entgegenhaltungen:
- WO-A1-2015/113770
- DE-A1-102011 051 557
- DE-A1-102014 017 555
- DE-A1-102016 216 011
- DE-U1- 20 318 654

## Beschreibung

### Stand der Technik

Die Erfindung betrifft eine Lenkwelle für ein Kraftfahrzeug, welche eine als Hohlwelle ausgebildete Außenwelle umfasst, in der eine Innenwelle koaxial angeordnet ist, die relativ zur Außenwelle in Richtung einer Längsachse der Lenkwelle teleskopierbar und mit der Außenwelle über mindestens einen Wälzkörper drehmomentschlüssig verbunden ist, wobei der Wälzkörper in Richtung der Längsachse abrollbar und in Umfangsrichtung bezüglich einer Drehung um die Längsachse formschlüssig zwischen Wälzkörperlaufbahnen an der Innenwelle und an der Außenwelle anliegt, wobei die Lenkwelle ein Sicherungselement umfasst, welches an der Außenwelle fixiert ist und einen zwischen Innenwelle und Außenwelle angeordneten Kupplungsabschnitt aufweist, über den die Innenwelle und die Außenwelle drehmomentschlüssig verbindbar sind.

Teleskopierbare Lenkwellen in Kraftfahrzeugen ermöglichen eine Verstellung der Lenksäule, wobei die Lenkradposition des bezüglich der Fahrtrichtung hinten an der Lenkwelle angebrachten Lenkrads längs, in Achsrichtung der Lenkwelle, eingestellt werden kann, um den Abstand zur Fahrerposition anzupassen. Außerdem kann die Lenkwelle im Fall eines Crashs in Längsrichtung zusammengeschoben werden, wodurch wirksam verhindert wird, dass die Lenksäule weiter in das Innere der Fahrgastzelle eindringt und zu Verletzungen der Insassen führt. Dies wird in der Regel durch die Bereitstellung zweier gegeneinander teleskopierbarer Wellen erreicht, nämlich einer äußeren Welle oder Außenwelle, die als Hohlwelle in Form eines rohrförmigen Hohlprofils ausgebildet ist, und einer darin längs, in Richtung der Längsachse der Lenkwelle verschieblich gelagerten inneren Welle oder Innenwelle. Die Innenwelle und die Außenwelle bilden gemeinsam die Lenkwelle, die durch teleskopierende Relativbewegung verkürzt oder verlängert werden kann.

Bei gattungsgemäßen Lenkwellen, die auch als Rollschiebewellen bezeichnet werden, dient mindestens ein, in der Regel eine Mehrzahl von Wälzkörpern, beispielsweise Kugeln, zur Ausbildung einer reibungsarmen Linear-Wälzlagerung, welche eine dauerhaft leichtgängige Verstellung der Innenwelle in der Außenwelle in Richtung der Längsachse zur Einstellung der Lenkradposition in Längsrichtung gewährleistet. Die Wälzkörper dienen zugleich als Formschlusselemente zur Übertragung des zur Lenkung eingebrachten Drehmoments von der Innenwelle auf die Außenwelle. Hierzu sind in Innen- und Außenwelle nutartige, sich radial gegenüberliegende, in Längsrichtung verlaufende Wälzkörperlaufbahnen ausgebildet, in denen die Wälzkörper nur in Längsrichtung abrollen können. Bezüglich einer Drehung um die Längsachse greifen die Wälzkörper formschlüssig in die Wälzkörperlaufbahnen ein. Dadurch wird ein als Drehmoment in die Innenwelle eingegebenes Lenkmoment als Kraft in Umfangsrichtung von der Wälzkörperlaufbahn der Innenwelle über die Rollfläche auf den Wälzkörper, und von diesem über dessen andere Rollfläche auf die Wälzkörperlaufbahn der Außenwelle übertragen. Die Wälzkörper dienen als Formschlusselemente, die bezüglich einer Kraftübertragung in Umfangsrichtung formschlüssig zwischen den Rollflächen angeordnet sind. In Längsrichtung rollen die Wälzkörper mit geringer Rollreibung ab, so dass sie nahezu spielfrei zwischen den Wälzkörperlaufbahnen eingesetzt werden können. Das hat den Vorteil, dass ein eingetragenes Lenkmoment praktisch spielfrei übertragen wird, was ein sicheres, präzises und geräuscharmes Lenken ermöglicht.

Um in einem Notfall, wenn Wälzkörper durch extreme Überlastung brechen oder aus dem Formschluss entfernt werden und als primäre Drehmomentübertragungselemente zur Übertragung des Drehmoments ausfallen, weiterhin zumindest eine grundlegende Lenkfunktion zu gewährleisten, kann die Drehmomentübertragung redundant ausgelegt sein. Beispielsweise ist es aus der dem Oberbegriff des Anspruchs 1 entsprechenden DE 10 2014 017 555 A1 bekannt, ein Sicherungselement zur Ausbildung einer Ersatzkupplung zwischen Innen- und Außenwelle bereitzustellen. Das Sicherungselement weist ein als Abdeckkappe ausgebildetes Anschlagelement auf, das auf dem freien Ende der Außenwelle gegen Drehung um die Längsachse gesichert, drehfest festgelegt wird und einen in den Öffnungsquerschnitt zwischen Innen- und Außenwelle eingreifenden Kupplungsabschnitt aufweist, der die Innenwelle zumindest teilweise formschlüssig umgreift, und dadurch Innenwelle und Außenwelle drehmomentschlüssig verbindend angeordnet ist. Auf diese Weise erzeugt das Anschlagelement über den Kupplungsabschnitt eine drehmomentschlüssige Verbindung zwischen Innen- und Hohlwelle. Dadurch, dass das Anschlagelement bezüglich Form, Abmessungen und Material vorrangig auf seine Montage-, Anschlag- und Dichteigenschaften optimiert ist, und hierzu beispielsweise als relativ dünnwandiges Bauteil aus einem nachgiebigen, gleitfähigen Material wie Kunststoff gefertigt ist, kann es jedoch nur ein relativ geringes Drehmoment übertragen, welches kleiner ist als das durch die Wälzkörper übertragbare Drehmoment.

Angesichts der vorangehend erläuterten Problematik ist es eine Aufgabe der vorliegenden Erfindung, eine verbesserte Lenkwelle anzugeben, welches eine verbesserte redundante Drehmomentübertragung beim Ausfall von Wälzkörpern bietet.

### Darstellung der Erfindung

Zur Lösung der vorgenannten Problematik wird erfindungsgemäß für eine Lenksäule der eingangs genannten Art vorgeschlagen, dass der Kupplungsabschnitt mindestens einen Übertragungskörper aufweist, der in losem Formschluss bezüglich einer Drehung um die Längsachse zwischen die Wälzkörperlaufbahnen der Innenwelle und der Außenwelle eingreift.

Der Kupplungsabschnitt ist bei der Erfindung mit dem Sicherungselement an der Außenwelle drehfest und in Längsrichtung fixiert. In seiner Grundform ist der Kupplungsabschnitt rahmenartig oder hülsen- oder rohrabschnittförmig ausgebildet, so dass er in den im Wesentlichen hohlprofilartigen Zwischenraum zwischen Innen- und Außenwelle einsetzbar ist. Zumindest ein Übertragungskörper - im Folgenden gleichbedeutend auch als Drehmomentübertragungskörper oder Kupplungskörper bezeichnet - ist derart an dem Kupplungsabschnitt angeordnet, dass er wie einer der Wälzkörper innerhalb des Wälzkörperlaufbahnquerschnitts zwischen Innen- und Außenwelle positioniert ist. Im Unterschied zu einem Wälzkörper, der während des Normalbetriebs der Lenkwelle im Formschluss die Wälzkörperlaufbahnen berührt, befindet sich der Übertragungskörper im losen Formschluss im Wälzkörperlaufbahnquerschnitt, und hat Spiel zu den Wälzkörperlaufbahnen. Hierzu kann der Übertragungskörperquerschnitt kleiner als der Wälzkörperquerschnitt vorgegeben werden, und radial und/oder in Umfangsrichtung Abstand zum Umfang des Wälzkörperlaufbahnquerschnitt haben. Daraus folgt, dass im Normalbetrieb das Drehmoment zwischen den Wälzkörperlaufbahnen ausschließlich über die intakten Wälzkörper übertragen wird.

Beim Ausfall der Wälzkörper als primäre Drehmomentübertragungselemente kommt es zu einer relativen Verdrehung von Innen- und Außenwelle, wodurch der freie Wälzkörperlaufbahnquerschnitt zwischen den dann nicht mehr radial fluchtenden Wälzkörperlaufbahnen verengt wird. Dadurch kommt der Übertragungskörper in mechanischen Kontakt mit den Wälzkörperlaufbahnen von Innen- und Außenwelle. Der im Normalzustand lose, berührungsfreie Formschluss wechselt beim Ausfall der Wälzkörper zu einem echten Formschluss, bei dem der Übertragungskörper gleichzeitig an den Wälzkörperlaufbahnen von Innen- und Außenwelle anliegt und als sekundäres Drehmomentübertragungselement fungiert, wodurch eine Redundanz geschaffen wird, welche die Übertragung des Lenkmoments zwischen Innen- und Außenwelle sicherstellt. Das Sicherungselement sorgt für eine verbesserte redundante Lenkungsfunktion beim Ausfall der Wälzkörper.

Ein Vorteil der Erfindung ist, dass der Übertragungskörper Im Normalbetrieb zumindest nicht beide Wälzkörperlaufbahnen gleichzeitig berührt, und folglich keine mechanische Reibung zwischen Innen- und Außenwelle verursacht, wenn diese in Längsrichtung zur Verstellung der Lenksäule teleskopierend relativ zueinander bewegt werden. Dadurch wird die Verstellkraft nicht beeinträchtigt, und unerwünschte Geräuschbildung, Abrieb und Verschleiß werden vermieden. Dies kann einfach dadurch realisiert werden, dass ein Übertragungskörper eine kleinere Querschnittsfläche hat als ein Wälzkörper. Die Querschnittsfläche des Übertragungselements entspricht der Grundfläche des Übertragungselements in einer Ebene die orthogonal zur Längsachse ausgerichtet ist. Die Querschnittsfläche des Wälzkörpers entspricht der Grundfläche des Wälzkörpers in einer Ebene die orthogonal zur Längsachse ausgerichtet ist, wobei im besonderen Fall das der Wälzkörper als eine Kugel ausgebildet ist, die Querschnittsfläche gleich der Projektionsfläche der Kugel ist.

Durch die lose Anordnung kann der für einen Formschluss im Notfall zur Verfügung stehende Materialquerschnitt eines Übertragungskörpers in Längsrichtung problemlos, und ohne Reibung, Verschleiß oder dergleichen berücksichtigen zu müssen, durch Verlängern so weit vergrößert werden, dass das Übertragungselement ein in Summe mit sämtlichen in einer Wälzkörperlaufbahn angeordneten Wälzkörpern vergleichbares Drehmoment redundant übertragen kann. Beispielsweise kann ein Übertragungskörper als Zylinderstift, -rolle oderbolzen oder als tonnenförmige Körper ausgebildet sein, mit einem geringfügig kleineren Durchmesser als die beispielsweise als Kugeln ausgebildeten Wälzkörper, wobei der Zylinder achsparallel zur Längsachse zwischen die Wälzkörperlaufbahnen eingreift. Die Länge des Zylinders kann so bemessen werden kann, dass der zur Drehmomentübertragung zwischen den Wälzkörperlaufbahnen in Umfangsrichtung zur Verfügung stehende Zylinderquerschnitt im Wesentlichen mindestens der Summe der hierzu beitragenden Kugelquerschnitte der in der betreffenden Wälzkörperlaufbahn angeordneten Kugeln entspricht. Dadurch kann das zylindrische Übertragungselement in Längsrichtung kürzer ausfallen als die Summe der Kugeldurchmesser in dieser Richtung, was vorteilhaft für einen kompakten Aufbau ist.

Eine sichere redundante Drehmomentübertragung kann dadurch realisiert werden, dass ein Übertragungskörper eine höhere Scherfestigkeit bezüglich einer Scherung in Umfangsrichtung zwischen radial gegenüberliegenden Wälzkörperlaufbahnen hat, als einer der darin angeordneten Wälzkörper, bevorzugt aller darin angeordneten Wälzkörper. Dies trägt dem Umstand Rechnung, dass auf die Drehmomentübertragungselemente - Wälzkörper bzw. Übertragungselemente - zwischen den Wälzkörperlaufbahnen von Innen- und Außenwelle im Wesentlichen eine Scherbelastung in Umfangsrichtung wirkt.

Ein weiterer Vorteil der Erfindung ist, dass der Übertragungskörper bezüglich der Drehmomentübertragung funktional gleichwertig ist mit einem Wälzkörper, und im Notfall die Kraft in Umfangsrichtung formschlüssig zwischen den dafür vorgesehenen Wälzkörperlaufbahnen von Innen- und Außenwelle überträgt. Dadurch, dass sich das erfindungsgemäße Übertragungselement mit dem Sicherungselement an der Außenwelle außerhalb der Längsposition der Wälzkörper fixiert ist, d.h. Längsabstand zum Wälzkörper hat, wird zudem gewährleistet, dass die Wälzkörperlaufbahnen im Bereich des Übertragungskörpers intakt sind, auch wenn die Wälzkörperlaufbahnen im Bereich beschädigter oder entfernter Wälzkörper beschädigt oder zerstört sind, oder die Halterung der Wälzkörper beschädigt ist. Dadurch kann eine höhere Sicherheit erreicht werden, als wenn sich der Übertragungskörper näher am Wälzkörper befindet, oder an der Halterung der Wälzkörper befestigt ist, beispielsweise einem Wälzkörperkäfig.

Die Anzahl der Übertragungskörper kann der Anzahl der Wälzkörperlaufbahnen entsprechen. Falls beispielsweise vier Wälzkörperlaufbahnen über den Umfang verteilt angeordnet sind, mit jeweils einem oder mehreren darin angeordneten Wälzkörpern, können bevorzugt entsprechend vier an dem Kupplungsabschnitt des Sicherungselement angeordnete Übertragungskörper in jeweils eine Wälzkörperlaufbahn in losem Formschluss eintauchen. Dadurch, dass jeweils ein Übertragungselement in jeder der Wälzkörperlaufbahnen angeordnet ist, kann das maximal redundant übertragbare Drehmoment bis in die Größenordnung des von den Wälzkörpern im Normalbetrieb übertragbaren Drehmoments angepasst werden. Alternativ kann nur ein Teil der Wälzkörperlaufbahnen mit Übertragungskörpern besetzt werden, um beispielsweise Gewicht oder Material zu sparen.

Eine Weiterbildung der Erfindung sieht vor, dass der Kupplungsabschnitt einen Träger aufweist, in dem mindestens ein separater Übertragungskörper aufnehmbar ist. Der Träger bildet eine Art Halte- und Positioniervorrichtung zur definierten Positionierung eines oder mehrerer Übertragungskörper, der oder die zunächst separat gefertigt und anschließend zur Ausbildung des Kupplungsabschnitts mit dem Träger verbunden werden, beispielsweise mittels form-, kraft- und/oder stoffschlüssiger Verbindungen. Daran ist vorteilhaft, dass der Träger und die Übertragungskörper hinsichtlich ihrer Eigenschaften unabhängig voneinander an ihre jeweilige Funktion anpassbar sind: Der Träger, der im Wesentlichen zur Halterung der Übertragungskörper in einer definierten räumlichen Position dient und dabei leicht montierbar sein soll, kann als leichtes, dünnwandiges Bauteil aus einem Material mit relativ geringer mechanischer Festigkeit gefertigt werden, beispielsweise aus einem thermoplastischen Polymer. Aus einem derartigen Kunststoff kann im Spritzguss mit geringem Aufwand ein komplex geformter Träger gefertigt werden, an dem Befestigungsmittel, Verbindungsmittel, Positioniermittel, Handhabungsmittel und/oder andere funktionale Elemente einstückig angespritzt sein können.

Der Kupplungsabschnitt kann Verbindungsmittel aufweisen, die form- und/oder kraft- und/oder stoffschlüssig mit der Außenwelle verbindbar sind. Die Verbindungsmittel können beispielsweise Formschlusselemente aufweisen, die federnd zur Verbindung mit dem Außenrohr formschlüssig einrastbar ausgestaltet sein können, beispielsweise in Form von Rastzungen oder Haltevorsprüngen. Alternativ oder zusätzlich können die Verbindungsmittel Kraftschlusselemente umfassen, beispielsweise zur reibschlüssigen Fixierung in der Öffnung des Außenrohrs. Die Verbindungsmittel können bevorzugt einstückig an dem als Kunststoff-Spritzgussteil gefertigten Träger ausgebildet werden. Alternative Ausführungen mit separat an dem Kupplungsabschnitt angebrachten Verbindungsmitteln sind ebenfalls denkbar und möglich.

Der Träger kann bevorzugt mindestens ein Befestigungsmittel aufweisen, in dem mindestens ein Übertragungskörper fixierbar ist. Als Befestigungsmittel können an dem Träger je nach Anzahl der Übertragungskörper ein oder mehrere Aufnahmen oder Halterungen für Übertragungskörper ausgebildet sein, beispielsweise als Einformungen, Öffnungen oder Vertiefungen eines Kunststoff-Spritzgussteils, in die jeweils ein Übertragungskörper unter elastischer Verformung zur Bildung einer formschlüssigen Verbindung federnd einrastbar oder einschnappbar ist. Ein oder mehrere, gleichartig oder auch hinsichtlich Form, Abmessungen oder Material unterschiedlich ausgebildete Übertragungskörper können separat gefertigt, und anschließend über die Befestigungsmittel mit dem Träger verbunden werden, beispielsweise durch formschlüssiges Einrasten in den besagten Spritzguss-Träger aus Kunststoff.

Es ist ebenfalls möglich, einen Übertragungskörper stoffschlüssig mit dem Träger zu verbinden, beispielsweise durch Kleben oder Schweißen. Wird der Träger m Kunststoff-Spritzguss gefertigt, kann ein Übertragungskörper auch ganz oder teilweise durch Umspritzen mit dem Kunststoff umschlossen oder darin eingebettet werden, um eine stoff- und formschlüssige Verbindung auszubilden.

Bevorzugt kann der Übertragungskörper aus einem Übertragungskörpermaterial bestehen, und der Träger aus einem davon verschiedenen Trägermaterial. Beispielsweise kann der Träger wie beschrieben als Spritzgussteil aus einem thermoplastischen Kunststoff bestehen, der sich einfach und kostengünstig auch in komplexen Formgebungen fertigen lässt, und dabei leicht ist und elastisch gestaltet sein kann, wodurch eine einfache Montage am Außenrohr ermöglicht wird, und auch eine einfache Montage des oder der Übertragungskörper. Alternativ kann der oder die Übertragungskörper bei der Fertigung des Trägers mit in die Form eingelegt werden und von dem Material, welches den Träger bildet, umspritzt werden. Dagegen kann ein Übertragungskörper im Hinblick auf die Belastungen bei der Drehmomentübertragung optimiert werden, wobei bevorzugt das Übertragungskörpermaterial härter und/oder fester und/oder steifer ist als das Trägermaterial, und eine höhere Bruchfestigkeit aufweist. Beispielsweise kann ein Übertragungskörper als Zylinderstift oder-rolle aus Stahl gefertigt sein, beispielsweise wie die Wälzkörper aus Wälzlagerstahl beispielsweise 100Cr6 nach EN ISO 683-17. Dadurch wird eine hohe Sicherheit der Drehmomentübertragung gewährleistet.

Die separate Fertigung und Bereitstellung des oder der Übertragungskörper ermöglicht eine flexible Anpassung an den jeweiligen Anwendungsfall. Beispielsweise können wahlweise Übertragungskörper aus unterschiedlich festem oder elastischem Material mit dem Träger verbunden werden, zur Realisierung unterschiedlicher Übertragungseigenschaften, oder auch Übertragungskörper mit unterschiedlichen Abmessungen. Es ist auch denkbar, unterschiedliche Übertragungskörper an einem Träger miteinander zu kombinieren.

Es kann vorgesehen sein, dass der Träger einen nach außen vorstehenden Kragen aufweist, der in Längsrichtung an der Außenwelle abstützbar ist. Der Kragen bildet eine Art Kopf oder Anschlag des erfindungsgemäßen Sicherungselements, von dem sich der Kupplungsabschnitt in Längsrichtung erstreckt. Zur Anbringung kann der Kupplungsabschnitt in die Öffnung des Außenrohrs zwischen Innen- und Außenwelle eingeführt werden, bis der Kragen stirnseitig an dem Außenrohr anschlägt, wobei der Kupplungsabschnitt eindeutig in dem sich an die Öffnung anschließenden Endbereich des Außenrohrs positioniert ist. Durch diesen stopfen- oder kappenartigen Aufbau ist das Sicherungselement einfach montierbar. Der Kragen kann an einem als Kunststoff-Spritzgussteil ausgebildeten Träger bevorzugt einstückig angeformt sein.

An dem Kupplungsabschnitt, bevorzugt an dem Träger, können Dichtungselemente angebracht sein, um ein Eindringen von Verunreinigungen zwischen Innen- und Außenwelle zu verhindern, und auch einem Austritt von Schmiermittel entgegenzuwirken. Das Dichtungselement könnte beispielsweise als Schnurringdichtung oder als O-Ring ausgebildet sein.

In einer bevorzugten Ausführungsform ist das Sicherungselement als Auszugssicherung ausgebildet, welches ein vollständiges Herausziehen der Innenwelle aus der Außenwelle verhindert. Durch diese Auszugsicherung wird ein Kraftfluss in Richtung der Längsachse von der Innenwelle auf die Außenwelle übertragen, wobei dieser Kraftfluss über Anschlagelemente der Innenwelle, die radial nach außen von der Innenwelle hervorstehen, den Kugelkäfig, das Sicherungselement auf einen Vorsprung der Außenwelle geleitet. Sicherungselement begrenzt somit die Teleskopierbarkeit bzw. die Teleskopierbewegung der Innenwelle gegenüber der Außenwelle.

### Beschreibung der Zeichnungen

Vorteilhafte Ausführungsformen der Erfindung werden im Folgenden anhand der Zeichnungen näher erläutert. Im Einzelnen zeigen:
- Figur 1: eine schematische perspektivische Ansicht einer erfindungsgemäßen Lenkwelle,
- Figur 2: einen Teil einer Lenkwelle gemäß Figur 1 in auseinander genommenem Zustand,
- Figur 3: eine schematische perspektivische Detailansicht der Lenksäule gemäß Figur 1,
- Figur 4: das in Figur 4 gezeigte Detail in auseinander gezogenem Zustand,
- Figur 5: das Sicherungselement der Lenksäule gemäß Figuren 2 bis 4 in auseinander gezogenem Zustand,
- Figur 6: einen Längsschnitt durch eine zweite Ausführungsform einer erfindungsgemäßen Lenksäule,
- Figur 7: eine Detailansicht des Längsschnitts gemäß Figur 6,
- Figur 8: einen Querschnitt A-A der Lenksäule gemäß Figur 6,
- Figur 9: eine Detailansicht des Querschnitts gemäß Figur 8..

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

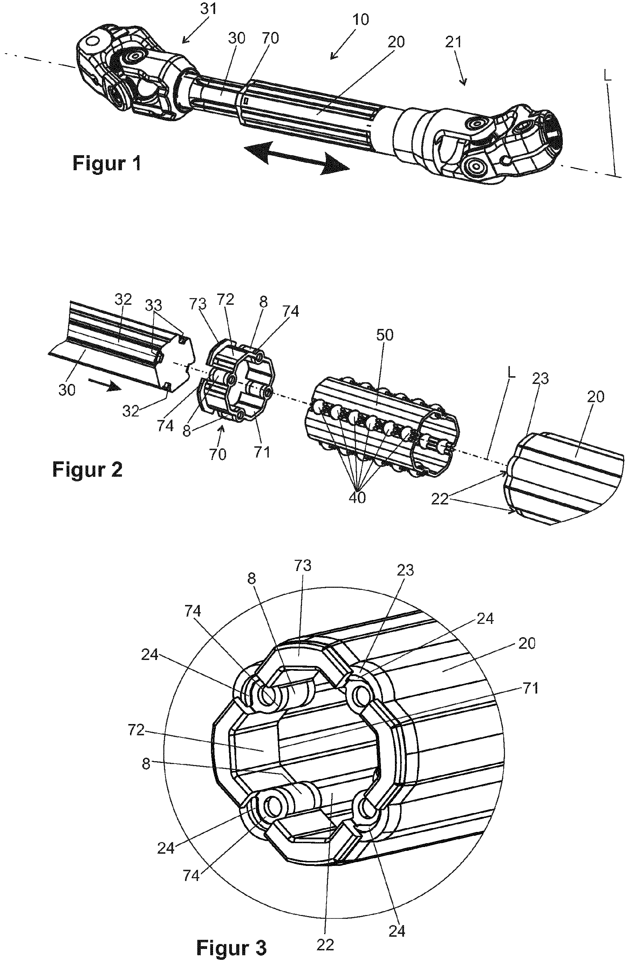

Figur 1 zeigt in perspektivischer Ansicht eine schematisch dargestellte Lenkwelle 10, die eine Außenwelle 20, auch äußere Welle oder Hohlwelle genannt, und eine Innenwelle 30, auch innere Hohlwelle genannt, aufweist, die gegeneinander teleskopierbar sind in Richtung der Längsachse L, d.h. in der mit dem Doppelpfeil angedeuteten Längsrichtung.

Die Außenwelle 20 weist an ihrem äußeren Ende, welches bezüglich der Innenwelle 30 in Längsrichtung abgewandt ist, eine Gabel 21 auf, welche einen Teil eines Universalgelenks bildet, mit dem die Lenkwelle 10 momentschlüssig mit dem Lenkstrang verbunden sein kann. Entsprechend weist die Innenwelle 30 an ihrem äußeren Ende, welches bezüglich der Außenwelle 20 in Längsrichtung abgewandt ist, eine Gabel 31 auf, welche einen Teil eines weiteren Universalgelenks bilden kann, mit dem die Lenkwelle 10 momentschlüssig mit dem Lenkstrang verbunden sein kann. Die Innenwelle 20 und die Außenwelle 30 sind bevorzugt aus gut kaltumformbarem Stahl gefertigt.

Die Innenwelle 30 ist koaxial in den offenen Innenquerschnitt der Außenwelle 20 eingesetzt und relativ dazu längs in beide Richtungen teleskopierend verschiebbar, wie in Figur 1 mit dem Doppelpfeil angedeutet.

Figur 2 zeigt einen Teil der Lenkwelle 1 gemäß Figur 1 in einer Explosionsdarstellung, bei der die einzelnen Bestandteile in Längsrichtung, d.h. in Richtung der Längsachse L, auseinander gezogen dargestellt sind. Daraus geht hervor, dass die Außenwelle 20 in ihrem der Innenwelle 30 zugewandten Umfangsbereich, in den die Innenwelle 30 in Längsrichtung wie mit dem Pfeil angedeutet einschiebbar ist, profiliert ist. Die Profilierung der Außenwelle 20 umfasst als Nuten 22 ausgebildete Wälzkörperlaufbahnen, die sich in der inneren Manteloberfläche in Längsrichtung erstrecken. Den Nuten 22 sind bezüglich der Wandung der Außenwelle 20 außen gegenüberliegend konvex vorstehende wulstartige Ausformungen in der äußeren Manteloberfläche ausgebildet. In der dargestellten Ausführung sind sowohl die Innenwelle 30 auch die Außenwelle 20 als Hohlprofile mit einer im Wesentlichen quadratischen Querschnitts-Grundform ausgebildet. Dabei sind insgesamt vier Nuten 22 gleichmäßig über den Umfang der Außenwelle 20 verteilt angeordnet, nämlich jeweils in der Mitte einer der Seiten des besagten quadratischen Querschnitts. Die Nuten 22 sind als Wälzkörperlaufbahnen, konkret als Kugellaufbahnen ausgebildet.

Der Endabschnitt der Innenwelle 30, welcher der Außenwelle 20 zugewandt und in diese teleskopartig einschiebbar ist, wie in Figur 1 dargestellt, ist ebenfalls profiliert. Die Profilierung umfasst ebenfalls Wälzkörperlaufbahnen in Form von Nuten 32, die sich von dem in die Außenwelle 20 einsteckbaren Ende in der äußeren Manteloberfläche der Innenwelle 30 in Längsrichtung, d.h. in Richtung der Längsachse L erstrecken. Die Nuten 32 erstrecken sich über den Teilabschnitt der Innenwelle 30, der in die Außenwelle 20 in Längsrichtung einschiebbar ist.

Zwischen Innenwelle 30 und Außenwelle 20 sind in den Wälzkörperlaufbahnen, die durch jeweils paarweise radial gegenüberliegende Nuten 22 und 32 begrenzt werden, als Wälzkörper Kugeln 40 angeordnet. Jeweils mehrere, in der in Figur 2 gezeigten Beispiel sechs Kugeln 40, sind in Längsrichtung hintereinander jeweils in einer Wälzkörperlaufbahn angeordnet. Dabei werden sie in einem hülsenförmigen Wälzkörper- bzw. Kugelkäfig 50 frei drehbar, mit definiertem Abstand relativ zueinander gehalten.

Die Kugeln 40 liegen im Normalbetrieb in den Nuten 22 und 32 an, und rollen bzw. wälzen darin bei einer relativen Verschiebung in Längsrichtung zwischen Außenwelle 20 und Innenwelle 30 ab, so dass eine leichtgängige und sichere wälzgelagerte Linearführung gebildet wird. Dadurch, dass die Kugeln 40 mit ihrem Querschnitt die durch die Nuten 22 und 32 begrenzten Wälzkörperlaufbahnen formschlüssig ausfüllen, erzeugen sie eine formschlüssige Verbindung in Umfangsrichtung zwischen Innenwelle 30 und Außenwelle 20, folglich eine drehmomentschlüssige Verbindung. Durch den Formschluss kann ein eingeleitetes Lenkmoment praktisch spielfrei zwischen Innenwelle 30 und Außenwelle 20 übertragen werden.

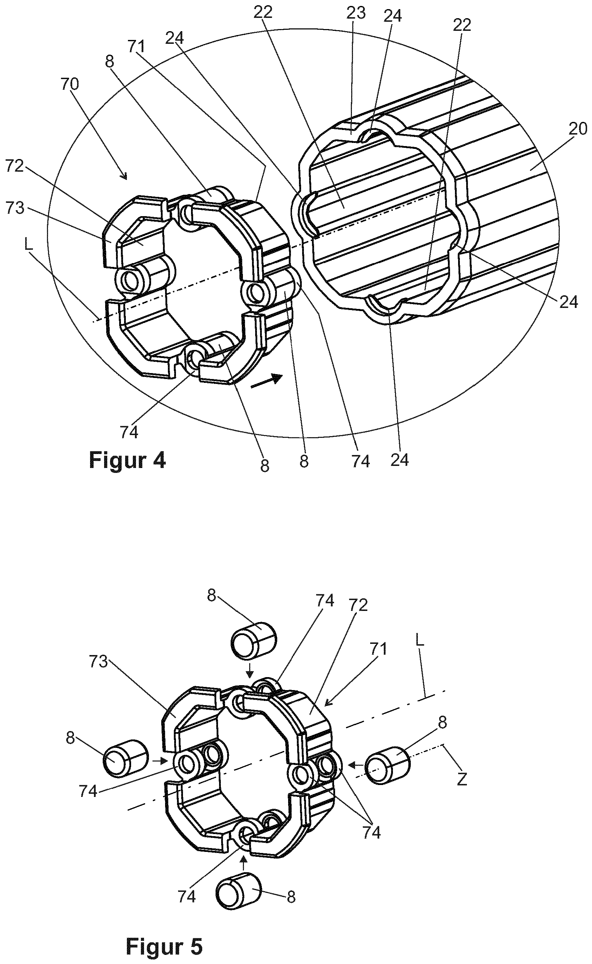

Ein erfindungsgemäßes Sicherungselement 70 wird in Längsrichtung in die Öffnung der Außenwelle 20 eingesetzt, wie in Figur 2 und Figur 4 mit dem Pfeil angedeutet, bis die in Figur 3 dargestellte Montageposition erreicht ist.

Das Sicherungselement 70 weist einen Träger 71 auf, der einen Kupplungsabschnitt 72 und einen davon nach außen, radial überstehenden Kragen 73 umfasst. Der Kupplungsabschnitt 72 hat eine hohlprofilabschnittförmige Grundform, welche mit Spiel in den Zwischenraum zwischen Innenwelle 30 und Außenwelle 20 einsetzbar ist. Im gezeigten Beispiel weist der Kupplungsabschnitt 72 als Befestigungsmittel insgesamt vier Aufnahmen 74 auf.

Der Träger 70 ist einschließlich Kragen 73 und Kupplungsabschnitt 72 mit den Aufnahmen 74 als Kunststoff-Spritzgussbauteil aus thermoplastischem Polymer gefertigt, welches das sogenannte Trägermaterial bildet.

In den Aufnahmen 74 ist jeweils ein Übertragungskörper 8 angebracht, im gezeigten Beispiel ein zylindrischer Stift oder Bolzen, der aus einem Übertragungskörpermaterial besteht, welches eine höhere Festigkeit hat als das vorgenannte Trägermaterial, beispielsweise Stahl. Die Übertragungskörper 8 haben eine Längsachse Z und einen kleineren Durchmesser als die Kugeln 40.

Die Aufnahmen 74 sind als offene Ausnehmungen derart geformt und bemessen, dass jeweils ein Übertragungskörper 8 unter elastischer Aufweitung des Kunststoffs darin eingeschnappt werden kann, beispielsweise in radialer Einsetzrichtung, wie dem in Figur 5 dargestellten Zustand vor dem Zusammenbau mit den Pfeilen angedeutet. Im einbaufertigen, zusammengebauten Zustand, wie in Figuren 2, 3 und 4 gezeigt, ist jeder Übertragungskörper 8 formschlüssig in einer Aufnahme 74 gehalten. Alternativ oder zusätzlich kann eine kraft- und/oder stoffschlüssige Befestigung erfolgen, beispielsweise durch Kleben oder Schweißen oder durch Umspritzen mittels des Materials des Trägers 71.

Im montierten Zustand der Lenkwelle 10 ist der Kupplungsabschnitt 72 in die Öffnung der Hohlwelle 20 eingesetzt, wie in Figur 3 dargestellt, wobei der Träger 71 mit dem Kupplungsabschnitt 72 kraft- und/oder formschlüssig in die Außenwelle eingepresst sein kann, bis der Kragen 73 in Längsrichtung gegen die Stirnfläche 23 der Außenwelle 20(siehe Figur 4) anliegt. Die in den Aufnahmen 74 gehaltenen Übertragungskörper 8 sind dabei zwischen den Nuten 22 und 32 angeordnet und mit ihrer Längsachse Z parallel zur Längsachse L ausgerichtet. Dabei sind sie in einem losen Formschluss derart positioniert, dass sie Spiel S zu den Nuten 22 und 32 haben, mit anderen Worten beabstandet sind von den die Kugeln 40 spielfrei aufnehmenden Wälzkörperlaufbahnen.

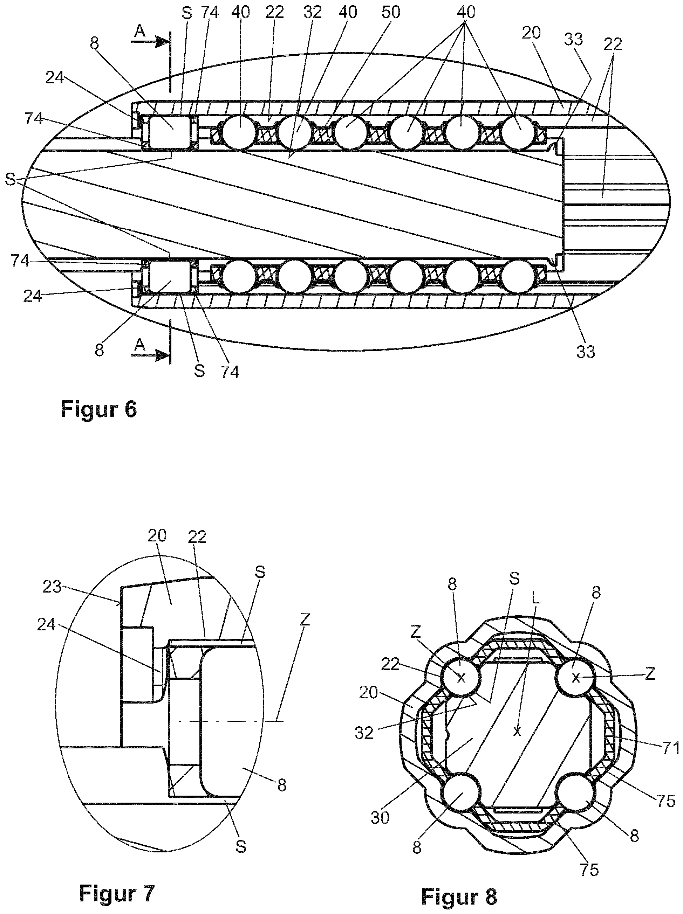

In den Darstellungen der Figuren 6 bis 9 ist eine weitere Ausführungsform eines erfindungsgemäßen Sicherungselements 8 gezeigt. Wie die erste Ausführung gemäß den Figuren 1 bis 5 weist es einen Kupplungsabschnitt 72 auf, der bevorzugt als Kunststoff-Spritzgussteil ausgebildet ist, und ebenfalls vier über den Umfang verteilte Aufnahmen 74 aufweist, in denen jeweils ein zylindrischer Übertragungskörper 8 befestigt ist, beispielsweise formschlüssig eingeschnappt.

Ein Unterschied zu der ersten Ausführung ist, dass das Sicherungselement 70 keinen Kragen 73 hat, und dadurch der Kupplungsabschnitt 72 in dieser Bauform mit dem Träger 71 identisch ist. Ansonsten ist Anordnung, Funktion und Wirkung des an der Außenwelle 20 festgelegten Kupplungsabschnitts 72 und der Übertragungskörper 8 im Prinzip gleich.

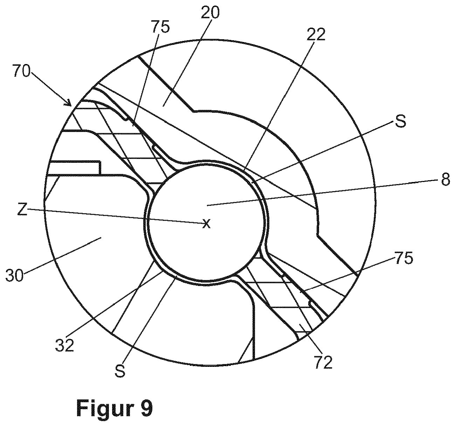

In dem Längsschnitt von Figur 6 ist deutlich erkennbar, dass der Kupplungsabschnitt 72 des Sicherungselements 70 wie der Kugelkäfig 50 in dem radialen Zwischenraum zwischen Innenwelle 30 und Außenwelle 20 angeordnet ist. Während die Kugeln 40 an den Nuten 22 und 32 spielfrei abrollbar anliegen, haben die über das Sicherungselement 70 an der Außenwelle 20 fixierten Übertragungskörper 8 Spiel S zu den Nuten 22 und 32, wie deutlich in dem vergrößerten Längsschnitt von Figur 7 und dem vergrößerten Querschnitt von Figur 9 erkennbar ist. Die Anordnung und die Abmessungen der Übertragungskörper 8 und die Ausbildung und Anordnung des Kugelkäfigs 50 sind bei der zweiten Ausführung gemäß den Figuren 6 bis 9 prinzipiell vergleichbar mit denen der in den Figuren 1 bis 5 gezeigten ersten Ausführung.

Zu Fixierung in der Öffnung der Außenwelle 20 weist der Kupplungsabschnitt 72 Befestigungselemente 75 auf, die beispielsweise wie in Figur 9 gezeigt als Haltevorsprünge ausgebildet sein können, welche den Kupplungsabschnitt 72 kraft- und/oder form- und/oder stoffschlüssig an der Innenseite der Außenwelle 20 fixieren. Die Befestigungselemente 75 können ebenfalls einstückig im Kunststoff-Spritzguss an den Träger 71 angeformt sein. Dadurch können die Übertragungskörper 8 positionsgenau fixiert werden, so dass sie wie in Figur 9 und 7 deutlich erkennbar Spiel S zu den Nuten 22 und 32 haben.

In Längsrichtung ist das Sicherungselement 70 in der Außenwelle 20 durch in den Öffnungsquerschnitt in den Zwischenraum zwischen Innenwelle 30 und Außenwelle 20 vorstehenden Vorsprung 24 fixiert, beispielsweise durch eine oder mehrere in die Stirnfläche 23 eingebrachte Verstemmungen oder dergleichen. Dadurch, dass das Sicherungselement 70 in der Außenwelle 20 in Längsrichtung fixiert ist, bildet es einen Längsanschlag für den Kugelkäfig 50, der damit ebenfalls gegen Herausziehen aus der Außenwelle 20 gesichert ist.

Die Innenwelle 30 weist in ihrem Endbereich ein nach außen, in den Zwischenraum zur Außenwelle 20 hin vorstehendes Anschlagelement 33 auf, welches beim Herausziehen der Innenwelle 30 an dem Kugelkäfig 50 bzw. an einem in dem Kugelkäfig 50 geführten Wälzkörper 40 anschlägt, wobei der Kugelkäfig 50 an das Sicherungselement 70 anschlägt und somit als Auszugsicherung dient. Durch diese beschriebene Auszugsicherung wird ein Kraftfluss in Richtung der Längsachse L von der Innenwelle 30 auf die Außenwelle über die Anschlagelemente 33, den Kugelkäfig 50, das Sicherungselement 70 und den Vorsprung 24 bereitgestellt. Sicherungselement 70 begrenzt somit die Teleskopierbarkeit der Innenwelle 30 gegenüber der Außenwelle 20.

Im Normalbetrieb dienen die Kugeln 40 als Drehmomentübertragungselemente. Die im losen Formschluss durch den Träger 71 positionierten Übertragungskörper 8 berühren die Flächen der Nuten 22 und 32 nicht, und verursachen somit auch keine unerwünschte Reibung oder Verschleiß. Beim Ausfall der Kugeln 40 gelangen die Übertragungskörper 8 in Umfangsrichtung in einen echten Formschluss zwischen den Nuten 22 und 32, so dass sie nunmehr für die Drehmomentübertragung sorgen. Ein Vorteil der erfindungsgemäßen Fixierung der Übertragungskörper 8 an der Außenwelle 20 ist, dass auch dann, wenn der Kugelkäfig 50 durch Überlastung verformt oder beschädigt ist, die Halterung der Übertragungskörper 8 in dem Kupplungsabschnitt 72 nicht beeinträchtigt ist, und eine redundante Drehmomentübertragung gewährleistet ist.

### Bezugszeichenliste

- 10: Lenkwelle
- 20: Außenwelle
- 21: Gabel
- 22: Nut (Wälzkörperlaufbahn)
- 23: Stirnfläche
- 24: Vorsprung
- 30: Innenwelle
- 31: Gabel
- 32: Nut (Wälzkörperlaufbahn)
- 33: Anschlagelemente
- 40: Kugel
- 50: Kugelkäfig
- 70: Sicherungselement
- 71: Träger
- 72: Kupplungsabschnitt
- 73: Kragen
- 74: Aufnahme
- 75: Befestigungselement
- 8: Übertragungskörper

- L: Längsachse
- Z: Längsachse
- S: Spiel

## Patentansprüche

1. Lenkwelle (10) für ein Kraftfahrzeug, welche eine als Hohlwelle ausgebildete Außenwelle (20) umfasst, in der eine Innenwelle (30) koaxial angeordnet ist, die relativ zur Außenwelle (20) in Richtung einer Längsachse (L) der Lenkwelle (10) teleskopierbar und mit der Außenwelle (20) über mindestens einen Wälzkörper (40) drehmomentschlüssig verbunden ist, wobei der Wälzkörper (40) in Richtung der Längsachse (L) abrollbar und in Umfangsrichtung bezüglich einer Drehung um die Längsachse (L) formschlüssig zwischen Wälzkörperlaufbahnen (22, 32) an der Innenwelle (30) und an der Außenwelle (20) anliegt, wobei die Lenkwelle ein Sicherungselement (70) umfasst, welches an der Außenwelle (20) fixiert ist und einen zwischen Innenwelle (30) und Außenwelle (20) angeordneten Kupplungsabschnitt (72) aufweist, über den die Innenwelle (30) und die Außenwelle (20) drehmomentschlüssig verbindbar sind,
**dadurch gekennzeichnet,**
**dass** der Kupplungsabschnitt (72) mindestens einen Übertragungskörper (8) aufweist, der in losem Formschluss bezüglich einer Drehung um die Längsachse (L) zwischen die Wälzkörperlaufbahnen (22, 32) der Innenwelle (30) und der Außenwelle (20) eingreift.

2. Lenkwelle nach Anspruch 1, **dadurch gekennzeichnet, dass** der Kupplungsabschnitt (72) einen Träger (71) aufweist, in dem mindestens ein separater Übertragungskörper (8) aufnehmbar ist.

3. Lenkwelle nach Anspruch 2, **dadurch gekennzeichnet, dass** der Träger (71) mindestens ein Befestigungsmittel (74) aufweist, an dem mindestens ein Übertragungskörper (8) fixierbar ist.

4. Lenkwelle nach Anspruch 2, **dadurch gekennzeichnet, dass** der Übertragungskörper (8) aus einem Übertragungskörpermaterial besteht, und der Träger (71) aus einem davon verschiedenen Trägermaterial.

5. Lenkwelle nach Anspruch 4, **dadurch gekennzeichnet, dass** das Übertragungskörpermaterial härter und/oder fester und/oder steifer ist als das Trägermaterial.

6. Lenkwelle nach einem der vorangehenden Ansprüche, **dadurch gekennzeichnet, dass** der Kupplungsabschnitt (72) Verbindungsmittel (73, 75) aufweist, die form- und/oder kraft- und/oder stoffschlüssig mit der Außenwelle (20) verbindbar sind.

7. Lenkwelle nach einem der vorangehenden Ansprüche, **dadurch gekennzeichnet, dass** die Anzahl der Übertragungskörper (8) der Anzahl der Wälzkörperlaufbahnen entspricht.

8. Lenkwelle nach einem der vorangehenden Ansprüche, **dadurch gekennzeichnet, dass** ein Übertragungskörper (8) eine kleinere Querschnittsfläche hat als ein Wälzkörper (40), wobei die Querschnittsfläche des Übertragungskörpers (8) der Grundfläche des Übertragungskörpers (8) in einer Ebene entspricht, die orthogonal zur Längsachse (L) ausgerichtet ist, und die Querschnittsfläche des Wälzkörpers (40) der Grundfläche des Wälzkörpers (40) in einer Ebene entspricht, die orthogonal zur Längsachse (L) ausgerichtet ist.

9. Lenkwelle nach einem der vorangehenden Ansprüche, **dadurch gekennzeichnet, dass** ein Übertragungskörper (8) eine höhere Scherfestigkeit bezüglich einer Scherung in Umfangsrichtung zwischen radial gegenüberliegenden Wälzkörperlaufbahnen (22, 32) hat, als einer der darin angeordneten Wälzkörper (40).

10. Lenkwelle nach einem der vorangehenden Ansprüche, **dadurch gekennzeichnet, dass** der Träger (71) einen nach außen vorstehenden Kragen (73) aufweist, der an der Außenwelle (20) abstützbar ist.

11. Lenkwelle nach einem der vorangehenden Ansprüche, **dadurch gekennzeichnet, dass** das Sicherungselement (70) als Auszugssicherung ausgebildet ist, welches ein vollständiges Herausziehen der Innenwelle aus der Außenwelle verhindert.

## Claims

1. A steering shaft (10) for a motor vehicle, which steering shaft (10) comprises an outer shaft (20) which is configured as a hollow shaft and in which an inner shaft (30) is arranged coaxially which can be telescoped relative to the outer shaft (20) in the direction of a longitudinal axis (L) of the steering shaft (10) and is connected in a torque-transmitting manner to the outer shaft (20) via at least one rolling body (40), it being possible for the rolling body (40) to roll in the direction of the longitudinal axis (L), and said rolling body (40) bearing against the inner shaft (30) and against the outer shaft (20) in a positively locking manner between rolling body raceways (22, 32) in the circumferential direction with regard to a rotation about the longitudinal axis (L), the steering shaft comprising a securing element (70) which is fixed on the outer shaft (20) and has a coupling section (72) which is arranged between the inner shaft (30) and the outer shaft (20) and via which the inner shaft (30) and the outer shaft (20) can be connected in a torque-transmitting manner,
**characterized**
**in that** the coupling section (72) has at least one transmission body (8) which engages in a loose positively locking connection with regard to a rotation about the longitudinal axis (L) between the rolling body raceways (22, 32) of the inner shaft (30) and the outer shaft (20) .

2. The steering shaft as claimed in claim 1, **characterized in that** the coupling section (72) has a carrier (71), in which at least one separate transmission body (8) can be received.

3. The steering shaft as claimed in claim 2, **characterized in that** the carrier (71) has at least one fastening means (74), on which at least one transmission body (8) can be fixed.

4. The steering shaft as claimed in claim 2, **characterized in that** the transmission body (8) consists of a transmission body material, and the carrier (71) consists of a carrier material which is different than said transmission body material.

5. The steering shaft as claimed in claim 4, **characterized in that** the transmission body material is harder and/or stronger and/or stiffer than the carrier material.

6. The steering shaft as claimed in one of the preceding claims, **characterized in that** the coupling section (72) has connecting means (73, 75) which can be connected to the outer shaft (20) in a positively locking and/or non-positive and/or integrally joined manner.

7. The steering shaft as claimed in one of the preceding claims, **characterized in that** the number of transmission bodies (8) corresponds to the number of rolling body raceways.

8. The steering shaft as claimed in one of the preceding claims, **characterized in that** a transmission body (8) has a smaller cross-sectional area than a rolling body (40), the cross-sectional area of the transmission body (8) corresponding to a projection plane of the transmission body (8) in a plane which is orientated orthogonally to the longitudinal axis (L), and the cross-sectional area of the rolling body (40) corresponding to a projection plane of the rolling body (40) in a plane which is orientated orthogonally to the longitudinal axis (L).

9. The steering shaft as claimed in one of the preceding claims, **characterized in that** a transmission body (8) has a higher shear strength with regard to a shear in the circumferential direction between rolling body raceways (22, 32) which lie radially opposite one another than one of the rolling bodies (40) which are arranged therein.

10. The steering shaft as claimed in one of the preceding claims, **characterized in that** the carrier (71) has an outwardly projecting collar (73) which can be supported on the outer shaft (20).

11. The steering shaft as claimed in one of the preceding claims, **characterized in that** the securing element (70) is configured as a pull-out securing means which prevents complete pulling of the inner shaft out of the outer shaft.

## Revendications

1. Arbre de direction (10) pour un véhicule automobile, qui comprend un arbre extérieur (20) réalisé sous forme d'arbre creux, dans lequel est disposé coaxialement un arbre intérieur (30), qui peut être télescopé par rapport à l'arbre extérieur (20) dans la direction d'un axe longitudinal (L) de l'arbre de direction (10) et qui est connecté par transfert de couple à l'arbre extérieur (20) par le biais d'au moins un corps de roulement (40), le corps de roulement (40) pouvant rouler dans la direction de l'axe longitudinal (L) et s'appliquant, dans la direction périphérique par rapport à une rotation autour de l'axe longitudinal (L), par engagement par correspondance de formes entre des chemins de roulement des corps de roulement (22, 32) contre l'arbre intérieur (30) et l'arbre extérieur (20), l'arbre de direction comprenant un élément de fixation (70), qui est fixé à l'arbre extérieur (20) et qui présente une portion d'accouplement (72) disposée entre l'arbre intérieur (30) et l'arbre extérieur (20), par le biais de laquelle l'arbre intérieur (30) et l'arbre extérieur (20) peuvent être connectés par transfert de couple,
**caractérisé en ce que**
la portion d'accouplement (72) présente au moins un corps de transfert (8) qui s'engage par engagement par correspondance de formes lâche par rapport à une rotation autour de l'axe longitudinal (L) entre les chemins de roulement des corps de roulement (22, 32) de l'arbre intérieur (30) et de l'arbre extérieur (20).

2. Arbre de direction selon la revendication 1, **caractérisé en ce que** la portion d'accouplement (72) présente un support (71) dans lequel peut être reçu au moins un corps de transfert séparé (8) .

3. Arbre de direction selon la revendication 2, **caractérisé en ce que** le support (71) présente au moins un moyen de fixation (74) au niveau duquel peut être fixé au moins un corps de transfert (8).

4. Arbre de direction selon la revendication 2, **caractérisé en ce que** le corps de transfert (8) se compose d'un matériau de corps de transfert, et le support (71) se compose d'un matériau de support différent de celui-ci.

5. Arbre de direction selon la revendication 4, **caractérisé en ce que** le matériau de corps de transfert est plus dur et/ou plus solide et/ou plus rigide que le matériau de support.

6. Arbre de direction selon l'une quelconque des revendications précédentes, **caractérisé en ce que** la portion d'accouplement (72) présente des moyens de connexion (73, 75), qui peuvent être connectés par engagement par correspondance de formes et/ou par force et/ou par liaison de matière à l'arbre extérieur (20).

7. Arbre de direction selon l'une quelconque des revendications précédentes, **caractérisé en ce que** le nombre des corps de transfert (8) correspond au nombre des chemins de roulement des corps de roulement.

8. Arbre de direction selon l'une quelconque des revendications précédentes, **caractérisé en ce qu'**un corps de transfert (8) présente une plus petite surface en section transversale qu'un corps de roulement (40), la surface en section transversale du corps de transfert (8) correspondant à la surface de base du corps de transfert (8) dans un plan qui est orienté perpendiculairement à l'axe longitudinal (L), et la surface en section transversale du corps de roulement (40) correspondant à la surface de base du corps de roulement (40) dans un plan qui est orienté perpendiculairement à l'axe longitudinal (L) .

9. Arbre de direction selon l'une quelconque des revendications précédentes, **caractérisé en ce qu'**un corps de transfert (8) présente une résistance au cisaillement par rapport à un cisaillement dans la direction périphérique entre des chemins de roulement des corps de roulement (22, 32) opposés radialement, qui est supérieure à celle de l'un des corps de roulement (40) disposés dans ceux-ci.

10. Arbre de direction selon l'une quelconque des revendications précédentes, **caractérisé en ce que** le support (71) présente une bride (73) en saillie vers l'extérieur, qui peut être supportée sur l'arbre extérieur (20).

11. Arbre de direction selon l'une quelconque des revendications précédentes, **caractérisé en ce que** l'élément de fixation (70) est réalisé sous forme de fixation anti-arrachement qui empêche un arrachement complet de l'arbre intérieur hors de l'arbre extérieur.
